# EUROPÄISCHE PATENTSCHRIFT

(11) **EP 3 174 728 B1**
(45) Veröffentlichungstag und Bekanntmachung des Hinweises auf die Patenterteilung: **19.09.2018**
(21) Anmeldenummer: 15738273.0
(22) Anmeldetag: 14.07.2015
(51) Int. Cl.: B42D 25/29, B42D 25/328, G02B 5/18, B42D 25/425, B42D 25/351, B42D 25/373

(54) **SICHERHEITSELEMENT ZUR HERSTELLUNG VON WERTDOKUMENTEN**
SECURITY ELEMENT FOR PRODUCING SECURITIES
ÉLÉMENT DE SÉCURITÉ POUR LA FABRICATION DE DOCUMENTS DE VALEUR

(30) Priorität: 31.07.2014 DE 102014011425
(43) Veröffentlichungstag der Anmeldung: 07.06.2017
(73) Patentinhaber: Giesecke+Devrient Currency Technology GmbH, 81677 München (DE)
(72) Erfinder: LOCHBIHLER, Hans, 80337 München (DE)
(86) Internationale Anmeldenummer: PCT/EP2015/001442
(87) Internationale Veröffentlichungsnummer: WO 2016/015828

(56) Entgegenhaltungen:
- DE-A1-102010 052 665
- DE-A1-102011 115 589
- DE-A1-102011 121 588

## Beschreibung

Die Erfindung bezieht sich auf ein Sicherheitselement zur Herstellung von Wertdokumenten, wie Banknoten, Schecks oder dergleichen, das ein Substrat mit einer Oberseite aufweist und mindestens ein Bild bereitstellt, wobei das Bild durch eine Gitterstruktur, die eine Vielzahl von Mikrokavitäten aufweist, gebildet ist, und die Mikrokavitäten jeweils in einer zur Oberseite parallel liegenden Raumrichtung eine Strukturweite von 0,5 µm bis 3 µm und senkrecht dazu eine Strukturtiefe aufweisen und ein Aspektverhältnis haben, das durch das Verhältnis von Strukturtiefe zu Strukturweite definiert ist, und auf die Gitterstruktur eine metallhaltige Beschichtung aufgebracht ist.

Die Erfindung bezieht sich auch auf ein Wertdokument mit einem solchen Sicherheitselement.

Die Erfindung bezieht sich weiter auf ein Herstellungsverfahren für ein Sicherheitselement für Wertdokumente, wie Banknoten, Schecks oder dergleichen, das mindestens ein Bild bereitstellt, wobei an einem Substrat, das eine Oberseite aufweist, zur Erzeugung eines Bildes eine Gitterstruktur, die eine Vielzahl nebeneinanderliegender Mikrokavitäten aufweist, ausgebildet wird, die Mikrokavitäten jeweils in einer zur Oberseite parallel liegenden Raumrichtung mit einer Strukturweite von 0,5 µm bis 3 µm und senkrecht dazu mit einer Strukturtiefe ausgebildet sind und ein Aspektverhältnis haben, das durch das Verhältnis von Strukturtiefe zu Strukturweite definiert ist, und auf die Gitterstruktur eine metallhaltige Beschichtung aufgebracht wird. Sicherheitselemente dienen dazu, bei Wertdokumenten, wie Banknoten, Schecks oder dergleichen, das Kopieren oder Fälschen zu erschweren. Für solche Sicherheitselemente haben sich geprägte Strukturen, die beispielsweise Mikrokavitäten in Form einer Gitterstruktur haben, bewährt.

Im Stand der Technik sind Sicherheitselemente bekannt, die eine Mikrokavitätenstruktur aufweisen. Sie stellen Mikrobilder bereit, die mit Moire-Vergrößerungsanordnungen vergrößert sichtbar sind. Die Gestaltung von Mikrobildern für Moire-Vergrößerungsanordnungen ist im Stand der Technik bereits in vielerlei Hinsicht diskutiert.

Mikrokavitätenstrukturen sind auch bekannt, um eine Absorption von einfallender Strahlung zu bewirken und dadurch beispielsweise einen Hintergrund für ein Bild bereitzustellen. Die EP 1434695 B1 beschreibt eine absorbierende Struktur mit einer Periode kleiner als die Lichtwellenlänge. Die Struktur ist als Kreuzgitter mit sinusförmigem Profil aufgebaut. Die WO 2005/106601 A2 betrifft Moire-Vergrößerungsanordnungen mit Mikrobildern, welche aus antireflektierenden Bereichen und teilweise reflektierenden Bereichen bestehen. Die antireflektierende Fläche wird durch Nanostrukturen mit einer Periode kleiner als 700 nm und einer Tiefe zwischen 150 nm und 350 nm gebildet. In der EP 1979768 A1 sind Mehrschichtkörper mit Mikrolinsenanordnung erläutert, bei denen Mikrobilder durch Mikrolöcher bzw. durch Bereiche mit unterschiedlicher Opazität erzeugt werden. Die WO 2002/101669 A2 beschreibt Mikrobilder, welche durch feine Punkte oder Perforationen gebildet werden. Die EP 1476317 A1 sowie die US 7468842 B2 beschreiben konkave bzw. konvexe Oberflächen, Bildelemente als Reliefoberflächen, welche mit Farbe gefüllt werden, und "light trap patterns", gebildet durch Sub-Wellenlängenstrukturen, zur Erzeugung von Mikrobildern für Moire-Vergrößerungsanordnungen.

Aus der DE 102008046128 A1 ist eine Mattstruktur für ein Sicherheitselement bekannt, die eine Vielzahl von Mikroelementen mit jeweils einer lateralen Abmessung unter 50 µm aufweist, wobei mindestens ein Geometrieparameter der Mikroelemente zufällig variiert, um den Matteffekt zu erzeugen. Der Geometrieparameter kann die Tiefe der Mikroelemente sein.

Die WO 2005/095119 A1 beschreibt ein Sicherheitselement in Form eines mehrschichtigen Folienkörpers, der einen blickwinkelabhängigen Farbverschiebungseffekt mittels Interferenz zeigt. In einer Replizierlackschicht ist dabei eine Reliefstruktur abgeformt, die hinsichtlich ihrer Geometrie so ausgestaltet ist, dass der Farbverschiebungseffekt nur in einzelnen Abschnitten erzeugt wird. Dazu wird das Aspektverhältnis der Reliefstruktur variiert.

Die DE 102006050047 A1 beschreibt ein Durchsichtsicherheitselement mit Mikrostrukturen, die als Mikrokavitäten ausgebildet sind, welche einen Abstand von 1 µm voneinander haben.

Metallisierte Sicherheitselemente, welche eine erhöhte Transmission in fein strukturierten Bereichen aufweisen, sind aus der EP 1786632 B1 bekannt. Darin ist eine mit einer Metallschicht versehene Reliefstruktur offenbart, die als diffraktive Struktur ausgebildet ist und Bereiche aus sinusförmigen Lineargittern oder aus Kreuzgittern enthält, die eine Periode im Subwellenlängenbereich haben. Um den gewünschten Transmissionseffekt zu erzielen, weisen die Strukturelemente ein Aspektverhältnis von größer als 0,5 auf. Solche Strukturen sind auch aus der DE 10 2004 042136 A1 bekannt. Die Herstellung solcher Strukturen, insbesondere auch die Replizierung und die Prägung von Subwellenlängenstrukturen mit hohem Aspektverhältnis, ist nicht ganz unproblematisch.

Aus der WO 2012/069163 A1 ist ein reflektives Sicherheitselement bekannt, das eine Mikrokavitätenstruktur aufweist, die als Retroreflektoren arbeiten. Durch geeignete Strukturierung wird ein farbiges Bild in Draufsicht erzeugt. Weiter werden Hologramme für Sicherheitselemente verwendet. Herkömmliche Hologramme sind mit Aluminium bedampfte Reliefstrukturen. Die Reliefstrukturen bilden ein Beugungsgitter mit unterschiedlichen Perioden und Orientierungen. Ein Betrachter nimmt den Hologrammeffekt in der ersten Beugungsordnung der Reflexion wahr. Das Gitterprofil bekannter Prägehologramme hat in der Regel einen sinusförmigen Querschnitt, wie beispielsweise der US 7129028 zu entnehmen ist. Solche Prägehologramme erscheinen in der Reflexion unbunt und sind im Durchlicht dunkel, d.h. weisen im Wesentlichen keine Transmission auf.

Als Sicherheitselemente sind weiter Gitterstrukturen bekannt, die in Transmission einen Farbeffekt in der nullten Beugungsordnung zeigen. Die WO 2012/019226 A1 beschreibt sogenannte zero-order gratings, die durch Farbfüllung bzw. Nanopartikel in einer Prägestruktur gebildet werden. Bei Durchlichtbetrachtung hängen Farbe und Polarisation vom Betrachtungswinkel ab.

Die WO 2013/053435 A1 beschreibt ein Rechteckgitter mit metallisierten Plateaus, die in unterschiedlichen Höhenniveaus liegen und eine dünne Metallschicht aufweisen. Solche Strukturen haben bei Durchlicht eine winkelabhängige Farbfilterung. Sie zeigen jedoch keine deutlich wahrnehmbare erste Beugungsordnung in der Reflexion, da die Gitterperiode im Subwellenlängenbereich liegt.

Das Patentdokument DE 10 2011 121588 A1 offenbart ein Sicherheitsdokument mit den Merkmalen des Oberbegriffs des Anspruchs 1.

Der Erfindung liegt die Aufgabe zugrunde, ein Sicherheitselement bereitzustellen, das in Reflexion und in Durchlicht unterschiedliche Eindrücke vermittelt und so die Fälschungssicherheit für ein Wertdokument erhöht.

Diese Aufgabe wird erfindungsgemäß gelöst mit einem Sicherheitselement zur Herstellung von Wertdokumenten, wie Banknoten, Schecks oder dergleichen, das ein Substrat mit einer Oberseite aufweist und mindestens ein Bild bereitstellt, wobei
- das Bild durch eine Gitterstruktur, die eine Vielzahl von Mikrokavitäten aufweist, gebildet ist, und
- die Mikrokavitäten jeweils in einer zur Oberseite parallel liegenden Raumrichtung eine Strukturweite von 0,5 µm bis 3 µm und senkrecht dazu eine Strukturtiefe aufweisen und ein Aspektverhältnis haben, das durch das Verhältnis von Strukturtiefe zu Strukturweite definiert ist,
- auf die Gitterstruktur eine metallhaltige Beschichtung aufgebracht ist, wobei
- die Mikrokavitäten rinnenförmig sind,
- das Aspektverhältnis der Mikrokavitäten 0,3 oder größer, vorzugsweise größer als 0,4, besonders bevorzugt größer als 0,8 und ganz besonders bevorzugt größer als 1,0 ist, und
- in der Gitterstruktur die Mikrokavitäten voneinander jeweils durch Streifen getrennt sind, die eben und jeweils mehr als 200 nm und maximal 1.200 nm breit sind.

Die Aufgabe wird weiter gelöst mit einem Herstellungsverfahren für ein Sicherheitselement für Wertdokumente, wie Banknoten, Schecks oder dergleichen, das mindestens ein Bild bereitstellt, wobei
- an einem Substrat, das eine Oberseite aufweist, zur Erzeugung eines Bildes eine Gitterstruktur, die eine Vielzahl nebeneinanderliegender Mikrokavitäten aufweist, ausgebildet wird,
- die Mikrokavitäten jeweils in einer zur Oberseite parallel liegenden Raumrichtung mit einer Strukturweite von 0,5 µm bis 3 µm und senkrecht dazu mit einer Strukturtiefe ausgebildet sind und ein Aspektverhältnis haben, das durch das Verhältnis von Strukturtiefe zu Strukturweite definiert ist, und
- auf die Gitterstruktur eine metallhaltige Beschichtung aufgebracht wird,
   wobei
- die Mikrokavitäten rinnenförmig sind,
- das Aspektverhältnis der Mikrokavitäten 0,3 oder größer, vorzugsweise größer als 0,4, besonders bevorzugt größer als 0,8 und ganz besonders bevorzugt größer als 1,0 ist, und
- in der Gitterstruktur die Mikrokavitäten voneinander jeweils durch Streifen getrennt sind, die eben und jeweils mehr als 200 nm und maximal 1.200 nm breit sind.

Die Aufgabe wird schließlich auch gelöst mit einem Wertdokument, das ein Sicherheitselement der genannten Art aufweist.

Die Erfindung verwendet ein metallisiertes Gitter mit rinnenförmigem Profil, wobei zwischen den rinnenförmigen Mikrokavitäten jeweils Streifen liegen, die eben sind und eine Breite von mehr als 200 nm und maximal 1.200 nm haben. Dadurch erreicht man einen winkelabhängigen Farbeffekt in Transmission sowie, durch die Anordnung der reflexiv wirkenden Streifen, eine Hologrammstruktur in Reflexion. Der Begriff "eben" für die Streifen beschreibt dabei, dass der Neigungswinkel zur Oberfläche, d.h. im Allgemeinen der Horizontalen, nicht größer als 30° ist. Die ebenen Streifen können auch eine gewisse Rauigkeit aufweisen, solange ein mittleres Aspektverhältnis von 0,2 nicht überschritten wird. Die Mikrokavitäten haben hingegen aufgrund ihrer Rinnenform zwei Abschnitte steiler als 70°.

Das erfindungsgemäße Sicherheitselement kombiniert die Durchsichteffekte, die von den rinnenförmigen Mikrokavitäten erzeugt werden, mit Draufsichtseffekten, die durch die ebenen Streifen zwischen den rinnenförmigen Mikrokavitäten erzeugt sind.

Die geometrische Anordnung der in Reflexion, d.h. in Draufsicht sichtbaren Streifen der Gitterstruktur strukturiert das Reflexionsbild, beispielsweise als Hologramm. Die geometrische Ausbildung und Anordnung der rinnenförmigen Mikrokavitäten strukturieren das Durchsichtsbild.

Die Beschichtung auf der Gitterstruktur ist metallisch, damit die Streifen reflexiv wirken. Bildet man sie so aus, dass in den rinnenförmigen Mikrokavitäten wie auf den Streifen die Beschichtung mit der gleichen nominellen Dicke aufgebracht ist, erhält man einen besonders guten Farbeffekt in Transmission in Kombination mit einer guten Reflexion und damit einem guten Hologrammeffekt in Draufsicht. Die Beschichtung ist damit im Bereich der Mikrokavitäten nominell gleich dick wie auf den Streifen. Unter dem Begriff "nominelle Dicke" wird dabei die Dicke gemessen senkrecht zur Oberfläche verstanden, wobei die Ebene der Oberfläche durch die ebenen Streifen definiert ist. Eine solche gleiche nominelle Dicke kann beispielsweise durch ein Aufdampfverfahren oder ein Sputterverfahren erreicht werden. Auch andere gerichtete Beschichtungsverfahren oder geeignete Beschichtungsverfahren kommen in Frage. Bei einer mit gleicher nomineller Dicke aufgebrachten Beschichtung unterscheidet sich in der Regel die lokale Schichtdicke, gemessen normal zur lokalen Oberflächentangente, zwischen den Mikrokavitäten und den Streifen. Dies bewirkt einen besonders guten Farbeffekt in Transmission durch die rinnenförmigen Mikrokavitäten.

Für die Strukturierung des Bildes in Durchlichtbetrachtung ist die Gitterstruktur, z.B. Art, Geometrie und Ausrichtung der rinnenförmigen Mikrokavitäten, ausschlaggebend. Es ist deshalb in einer Ausführungsform bevorzugt, mindestens zwei Arten von Mikrokavitäten vorzusehen, die sich hinsichtlich ihres Aspektverhältnisses unterscheiden. In einer Weiterbildung ist vorgesehen, dass das Aspektverhältnis der Mikrokavitäten in der Gitterstruktur gemäß einem vorbestimmten Muster bereichsweise variiert, wodurch das Durchsichtsbild definiert ist.

Der Begriff "bereichsweise" ist hier so zu verstehen, dass es im Sicherheitselement Bereiche mit unterschiedlicher Ausgestaltung der Gitterstruktur, z.B. das Aspektverhältnis betreffend, gibt.

In einer weiteren Ausführungsform sind die Mikrokavitäten und Streifen quer zur Rinnenrichtung periodisch. Beispielsweise bildet eine Mikrokavität mit dem an einer Seite danebenliegenden Streifen eine Periode. In dieser Ausführungsform ist es bevorzugt, die Periode gemäß einem ein Bild definierenden, vorbestimmten Muster bereichsweise zu variieren. Durch diese Variation wird z.B. das erzeugte Hologramm als Reflexionsbild erzeugt.

Das Aspektverhältnis der Mikrokavitäten wirkt sich, wie bereits erwähnt, auf das Transmissionsverhalten des Sicherheitselementes aus. Es ist deshalb in einer Ausführungsform bevorzugt, den ersten Bildbereich des Bildes, insbesondere den Vordergrund, durch zwei verschiedene Arten von Mikrokavitäten zu strukturieren, die sich hinsichtlich des Aspektverhältnisses unterscheiden. Tiefere Mikrokavitäten haben eine höhere Helligkeit in Durchlichtbetrachtung als flachere Mikrokavitäten und in der Regel auch ein anderes Farbverhalten, wie noch erläutert werden wird.

Eine kontinuierliche Intensitätsvariation im Durchlicht kann man erreichen, wenn das Aspektverhältnis der Mikrokavitäten in der Gitterstruktur gemäß einem den ersten Bildbereich, insbesondere den Vordergrund des Bildes definierenden, vorbestimmten Muster variiert.

Es ist in einer Ausführungsform vorgesehen, dass die metallhaltige Beschichtung ein Interferenzschichtaufbau mit der Schichtfolge Metall-Dielektrikum-Metall ist. Dann können Resonanzeffekte ausgenutzt werden, die bei bestimmten Aspektverhältnissen, insbesondere in Kombination mit bestimmten Aperturweiten, eine Rolle spielen. Auf diese lässt sich ein Farbeffekt erzeugen, der beispielsweise vom Betrachtungswinkel abhängen kann. Mit einem Interferenzschichtaufbau überzogene Mikrokavitäten zeigen insbesondere einen starken Intensitäts- bzw. Farbkontrast. Als Dielektrikum kommt SiO₂ in Frage, als Metall Aluminium oder Chrom.

Einen besonders guten Helligkeitsunterschied im Durchlicht erhält man bei einem Interferenzschichtaufbau, der hinsichtlich seiner Materialfolge und/ oder Schichtdickenfolge symmetrisch ist. Besonders bevorzugt ist eine Schichtfolge Aluminium-SiO₂-Aluminium, wobei die Schichtdicke des Aluminiums zwischen 7 nm und 25 nm, bevorzugt zwischen 10 nm und 15 nm, und die des SiO₂ zwischen 70 nm und 250 nm liegt.

Gemäß einer weiteren bevorzugten Ausgestaltung kann die metallhaltige Beschichtung durch eine reine Metallschicht gebildet sein. Eine solche Ausgestaltung hat den Vorteil, dass die Streifen opak erscheinen. Der Begriff "Metall" schließt dabei auch Metall-Legierungen ein. Als Metallschichten kommen beispielsweise Schichten aus Aluminium, Kupfer, Chrom, Silber, Gold oder eine Legierung daraus in Betracht, wobei die Schichtdicke der Metallschicht vorzugsweise zwischen 10 nm und 100 nm liegt.

Das Aspektverhältnis ist das Verhältnis von maximaler Tiefe zu minimaler lateraler Ausdehnung und variiert gemäß der gewünschten Bildstruktur im Sicherheitselement. Aufwendige Druckverfahren zur Bereitstellung kleiner und dennoch fein strukturierter Bilder sind deshalb nicht mehr nötig. Statt dessen können einfache Replizierverfahren zur Erzeugung der Gitterstruktur verwendet werden.

Unter Herstellgesichtspunkten ist es vorteilhaft, dass sich im Sicherheitselement die Oberflächenbeschichtung auf der Gitterstruktur zumindest in der nominellen Dicke lateral nicht ändert.

Für das erfindungsgemäße Herstellungsverfahren kommen insbesondere Direktbelichtungstechniken, z. B. mit Hilfe eines Laserwriters in Frage. Die Herstellung kann analog zu den bekannten Herstellungsverfahren für Mikrolinsen erfolgen. Das Original der Gitterstruktur wird über Direktbelichtung mit Hilfe eines Laserwriters in ein mit Photolack beschichtetes Substrat geschrieben und anschließend der belichtete Anteil des Photolacks entfernt. Ein belichtetes Original kann anschließend galvanisch abgeformt und somit ein Prägestempel erzeugt werden. Letztendlich wird die Struktur über einen Prägeprozess beispielsweise in UV-Lack auf Folie oder direkt (z. B. per Heißprägen in die Oberfläche der Folie) repliziert. Alternativ kann ein Nanoimprint-Verfahren eingesetzt werden. Aufwendigere Verfahren zur Originalherstellung, wie Elektronenstrahl- oder "Focussed Ion Beam"-Belichtungsverfahren, erlauben eine noch feinere Ausgestaltung der Geometrie der Gitterstruktur. Diese Herstellungsverfahren bieten viele Gestaltungsmöglichkeiten in der Wahl der Geometrie der Mikrokavitäten.

Anschließend erfolgt eine Beschichtung der Oberfläche, z. B. mit einer Metallschicht und/oder einem Interferenzschichtaufbau. Hierzu kommen unter anderem Elektronenstrahlbedampfen, Sputtern oder thermisches Verdampfen unter Vakuum in Frage. Zum Abschluss wird die Struktur zum Schutz vorzugsweise mit einer Deckschicht kaschiert.

Bei konstanter Aperturweite können Mikrokavitäten mit unterschiedlichen Aspektverhältnissen auch allein durch eine Variation der Tiefe der Mikrokavitäten, beispielsweise über eine entsprechende Variation der Belichtungsintensität eines Laserwriters, erzeugt werden. Eine solche Vorgehensweise bietet den Vorteil einer wesentlich einfacheren Datenaufbereitung.

Gemäß einer weiteren bevorzugten Ausgestaltung kann ein Motiv, das durch eine Anordnung von Mikrokavitäten gebildet wird, zusätzlich mit Aussparungen in Form von Zeichen, Mustern oder dergleichen ausgestattet sein, dem sogenannten "Cleartext". Dieser "Cleartext" besitzt eine hohe Transparenz in Transmission und hebt sich daher im Kontrast vom Motiv ab, das durch Mikrokavitäten gebildet wird. Außerdem erscheint der "Cleartext" farbneutral. Daraus ergeben sich zusätzliche Varianten, um kundenspezifische Designs zu realisieren. Zusätzlich erhöht sich die Fälschungssicherheit einer solchen Ausgestaltung.

Eine bevorzugte Herstellungsvariante für "Cleartext" ist es, Waschfarbe auf die Prägestruktur zu drucken, wie es beispielsweise aus WO 99/13157 A1 bekannt ist. Anschließend wird die geprägte Folie metallisiert. Schließlich wird in einem nachfolgenden Arbeitsgang die Waschfarbe mit der darüber befindlichen Metallschicht entfernt. Es ist auch möglich, den Cleartext mit Laserdemetallisierung auf der metallisch bedampften Prägefolie zu erzeugen, wobei ein Laserstrahl die Metallschicht teilweise wieder abträgt. Ferner lässt sich der Cleartext auch durch das sogenannte Metalltransferverfahren erzeugen, wie es beispielsweise aus WO 2014/044402 A1 bekannt ist. Die Cleartext-Bereiche müssen dazu erhaben angeordnet sein, sodass die Metallschicht dieser Bereiche durch den Kontakt mit einer Transferfolie abgetragen werden kann.

Das Sicherheitselement kann insbesondere als Sicherheitsfaden, Aufreißfaden, Sicherheitsband, Sicherheitsstreifen, Patch, Folienelement oder als Etikett ausgebildet sein. Insbesondere kann das Sicherheitselement transparente Bereiche oder Ausnehmungen überspannen und/oder für eine Sicherheitskarte oder ein Ausweisdokument (z.B. Reisepass) eingesetzt werden.

Das Sicherheitselement kann insbesondere Teil einer noch nicht umlauffähige Vorstufe zu einem Wertdokument sein, das neben dem erfindungsgemäßen Sicherheitselement beispielsweise auch weitere Echtheitsmerkmale (wie z. B. im Volumen vorgesehene Lumineszenzstoffe) aufweisen kann. Unter Wertdokumenten werden hier einerseits das Sicherheitselement aufweisende Dokumente verstanden. Andererseits können Wertdokumente auch sonstige Dokumente und Gegenstände sein, die mit dem erfindungsgemäßen Sicherheitselement versehen werden können, damit die Wertdokumente nicht kopierbare Echtheitsmerkmale aufweisen, wodurch eine Echtheitsüberprüfung möglich ist und zugleich unerwünschte Kopien verhindert werden. Chip- oder Sicherheitskarten, wie z. B. Bank- oder Kreditkarten, sind weitere Beispiele für ein Wertdokument.

Das erfindungsgemäße Herstellungsverfahren kann so ausgebildet werden, dass die beschriebenen bevorzugten Ausbildungen und Ausführungsformen des Sicherheitselementes hergestellt werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Zeichnungen, die auch erfindungswesentliche Merkmale offenbaren, noch näher erläutert. Zur besseren Anschaulichkeit wird in den Figuren auf eine maßstabs- und proportionsgetreue Darstellung verzichtet. Es zeigen:
- Fig.1: eine schematische Darstellung eines Teils eines Sicherheitselementes mit einer Gitterstruktur,
- Fig. 2: eine schematische Darstellung zur Verdeutlichung der Geometrie von Mikrokavitäten der Gitterstruktur,
- Fig. 3 und 4: schematische Darstellungen verschiedener Geometrien, welche für die Gitterstruktur der Fig. 1 möglich sind,
- Fig. 5: die Transmission eines Sicherheitselements als Funktion der Wellenlänge für unterschiedliche Einfallswinkel und Beschichtungsdicken,
- Fig.6: die Transmissionseigenschaften eines Sicherheitselementes als CIE-1931-Farbdiagramm der Gitterstrukturen der Fig. 5,
- Fig. 7: LCh-Werte als Funktion des Einfallswinkels für die Gitterstrukturen der Fig. 5,
- Fig. 8: eine Darstellung ähnlich der Fig. 6, jedoch nun für Gitterstrukturen mit unterschiedlicher Periode,
- Fig. 9: eine Darstellung ähnlich der Fig. 7 für die Gitterstrukturen der Fig. 8,
- Fig. 10 bis 12: Aufsichten auf Motive mit unterschiedlicher lateraler Variation der Gitterstruktur, und
- Fig. 13 bis 15: Schemadarstellungen zur Erläuterung der Wirkung des Sicherheitselementes in Durchsicht und in Draufsicht.

In den Figuren werden nachfolgend Ausführungsformen für ein Sicherheitselement 1 beschrieben, das ein Durchsichtsbild in Transmission und ein Reflexionsbild in Draufsicht bereitstellt. Die Bilder werden durch eine Gitterstruktur 4 erzeugt.

In einer Ausführungsform ist das Sicherheitselement 1 auf einer transparenten Folie 2 aufgebaut, auf welcher sich eine Prägelackschicht 3 befindet. In die Prägelackschicht 3 ist eine Gitterstruktur 4 abgeformt, die rinnenförmige Mikrokavitäten 5, 6 z.B. unterschiedlicher Tiefe aufweist. Zwischen den Mikrokavitäten 5, 6 befinden sich ebene Streifen 7. Die Mikrokavitäten 5, 6 und die Streifen 7 haben, wie noch erläutert werden wird, eine Weite bzw. Breite, die es nicht erlaubt, sie mit unbewaffnetem Auge aufzulösen.

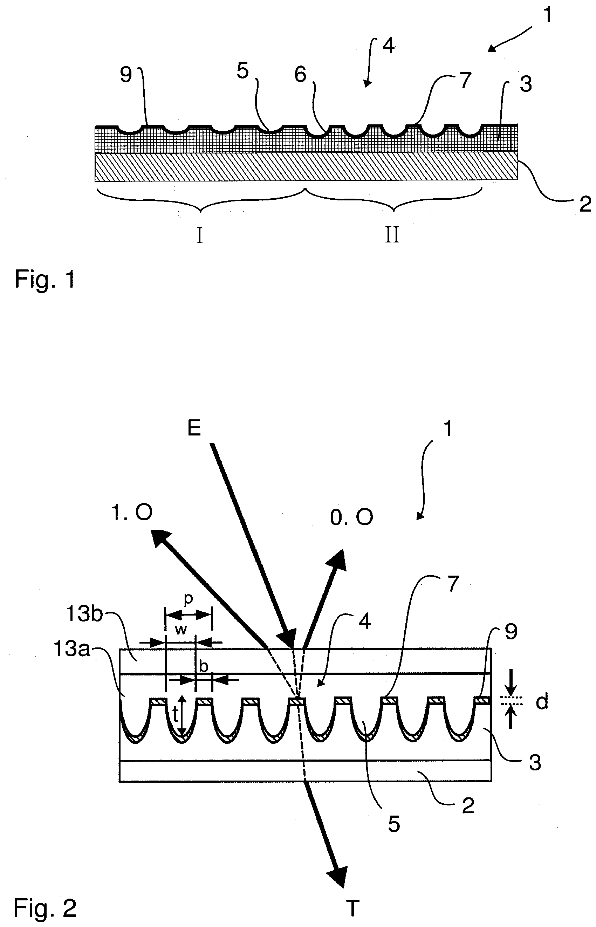

Fig. 1 zeigt, dass das Sicherheitselement in einer Ausführungsform zwei Bereiche I und II hat, in denen sich die Geometrie der Gitterstruktur 4 unterscheidet. Im Ausführungsbeispiel der Fig. 1 liegt der Unterschied zum einen in der Periode, mit der die Mikrokavitäten 5, 6 und die Streifen 7 angeordnet sind, sowie im Aspektverhältnis der Mikrokavitäten 5, 6. Wie nachfolgend noch erläutert werden wird, ist dies nur eine von mehreren Möglichkeiten, für eine unterschiedliche Geometrie der Gitterstruktur 4.

Fig. 2 zeigt exemplarisch einen Bereich des Sicherheitselementes 1, in dem die Geometrie der Gitterstruktur 4 homogen ist. Das Gitterelement 4 ist mit einer Schicht 9 beschichtet, die z.B. aus Aluminium besteht. Fig. 2 zeigt schematisch zur Veranschaulichung einige Mikrokavitäten 5 im Querschnitt. Sie haben eine Strukturweite w und eine Strukturtiefe t. Die Strukturweite w der Mikrokavitäten 5 beträgt in Ausführungsbeispielen zwischen 0,5 und 3 µm. Die Strukturtiefe t ist so gewählt, dass ein Aspektverhältnis t/w für jede der Mikrokavitäten der Gitterstruktur 4 größer als 0,3, vorzugsweise größer als 0,4, besonders bevorzugt größer als 0,8 und ganz besonders bevorzugt größer als 1,0 ist. Die Mikrokavitäten sind so groß, dass eine Lichtbeugung nicht (mehr) dominiert, andererseits hinsichtlich ihrer Strukturweite w und der Strukturtiefe t so klein, dass strahlenoptische Effekte (noch) nicht dominieren.

Zwischen benachbarten Mikrokavitäten 5 befindet sich jeweils ein Streifen 7, der die Breite b hat. Mikrokavitäten 5 mit benachbartem Streifen 7 wiederholen sich, so dass durch w + b die Periode p der periodischen Gitterstruktur 4 definiert ist. Die Breite b der Streifen 7 ist größer als 200 nm und überschreitet 1,2 µm nicht. Die Periode p liegt zwischen 300 nm und 5.000 nm.

Die Schicht 9 ist in einer Dicke d aufgetragen, die so groß gewählt ist, dass die Transmission durch das Sicherheitselement 1 im Wesentlichen in den Mikrokavitäten erfolgt. Die Dicke d der Schicht 9 ist auf der Gitterstruktur 4 nominal gleich, was beispielsweise durch ein gerichtetes Bedampfen mit dem Metall, welches die Schicht 9 bildet, erreicht werden kann. Dadurch ist die Metallschicht an den schräg gestellten oder senkrecht verlaufenden Abschnitten der rinnenförmigen Mikrokavitäten senkrecht zur lokalen Oberflächenneigung dünner, als an horizontal verlaufenden Flächenstücken.

Die Geometrie der Mikrokavitäten wirkt sich auf das Transmissionsverhalten des Sicherheitselementes 1 aus. Einfallende Strahlung E wird teilweise direkt reflektiert. Dies ist in Fig. 2 als "0. O" bezeichnet, was die nullte Ordnung der Reflexion (entsprechend der üblichen spiegelnden Reflexion) wiedergibt. Da die Periode p im Bereich der Wellenlänge des Lichtes liegt, wirkt die periodische Abfolge von Mikrokavitäten 5 und Streifen 7 auch diffraktiv, so dass es auch eine erste Ordnung der Reflexion gibt. Sie ist mit "1.O" in der Zeichnung symbolisiert. Die in der Fig. 2 eingezeichneten Strahlen sind natürlich nur exemplarisch an einem Punkt des Sicherheitselementes 1 eingetragen. Tatsächlich fällt die Strahlung E flächig auf das Sicherheitselement 1 ein.

Um ein an beiden Deckflächen flaches Sicherheitselement 1 zu erhalten, ist die Gitterstruktur 1 mit einer Decklackschicht 13a sowie einer Schutzschicht 13b an ihrer Oberseite abgedeckt. Auf diese Weise ist die z.B. metallische Struktur der Schicht 9 in ein Dielektrikum eingebettet. Die Schutzschicht 13b kann beispielsweise als aufkaschierte Deckfolie realisiert werden.

Die Transmissionseigenschaften sowie die Reflexionseigenschaften des Sicherheitselementes 1 können bereichsweise eingestellt werden, indem die Geometrie der Gitterstruktur 4 in Bereichen, beispielsweise den Bereichen I und II der Fig.1, variiert wird. In einer ersten Ausführungsform wird das Aspektverhältnis der Mikrokavitäten variiert. In einer zweiten Ausführungsform wird die Periode p der Gitterstruktur 4 variiert. Weiter kann bei gleichbleibender Periode die Strukturweite w und die Breite b variiert werden. Dies stellt eine weitere Ausführungsform dar. Die Merkmale dieser Ausführungsformen können auch kombiniert werden. So zeigt beispielsweise Fig. 1 eine Ausführungsform, bei der sowohl die Aspektverhältnisse der Mikrokavitäten (hier durch zwei Typen von Mikrokavitäten 5, 6), als auch die Periode p sich in den Bereichen I und II unterscheidet. Im Bereich I und II sind die Strukturweiten w der Mikrokavitäten 5, 6 gleich, jedoch unterscheiden sich die Strukturtiefen t. Die Periode p ist in den Bereichen I und II der Fig. 1 dadurch unterschiedlich, dass die Breite b variiert wird. Sie ist im Bereich I größer als im Bereich II.

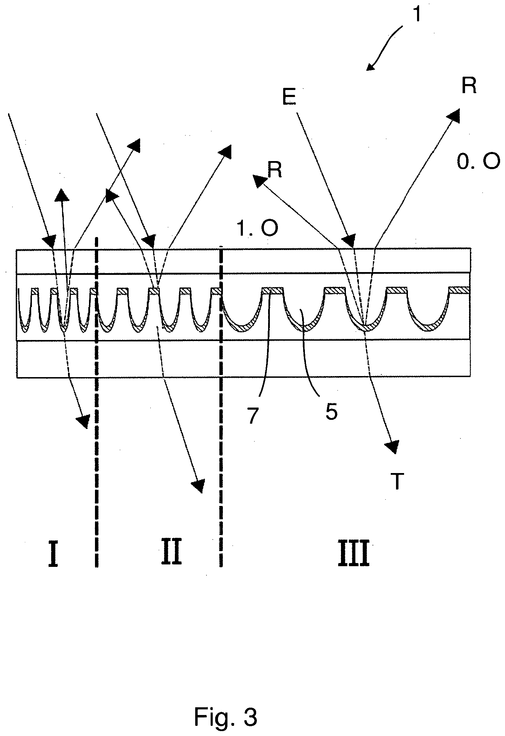

Fig. 3 zeigt eine Ausführungsform, bei der drei Bereiche I, II und III vorhanden sind, die sich hinsichtlich ihrer Periode p unterscheiden. Das Verhältnis von Strukturweite w zur Breite b ist dabei in den Bereichen I, II, III konstant. Auch ist die Strukturtiefe t in allen Bereichen identisch. Das Aspektverhältnis nimmt vom Bereich I bis zum Bereich III ab, die Periode zu. Diese unterschiedliche Geometrie der Gitterstruktur 4 in den Bereichen I bis III beeinflusst den Transmissionsgrad T und die spektralen Eigenschaften der Transmission. Außerdem wirkt sich die unterschiedliche Periode auf den Ausfallswinkel der jeweiligen Beugungsordnungen gemäß folgender Gleichung aus sin θ₀ + sin θₙ = n · λ₀/p, wobei θ₀ der Einfallswinkel, θₙ der Ausfallswinkel, "n" die n-te Beugungsordnung, λ₀ die Wellenlänge des einfallenden Lichts und p die Gitterperiode ist. Hierbei ist zu berücksichtigen, dass die Wellenlänge von der Brechzahl des umgebenden Mediums abhängt. Für UV-härtende Lacke und Kunststoffe sowie Kaschierfolien liegt dieser bei etwa 1,5. Als Material für die Schicht 9 kommen hochreflektierende Materialien, wie Aluminium, Silber, Gold, Kupfer oder Chrom oder Legierungen daraus, für alle Ausführungsformen des Sicherheitselementes 1 in Frage.

Die gewünschte Transmission tritt auf, wenn das Aspektverhältnis größer als 0,3 ist.

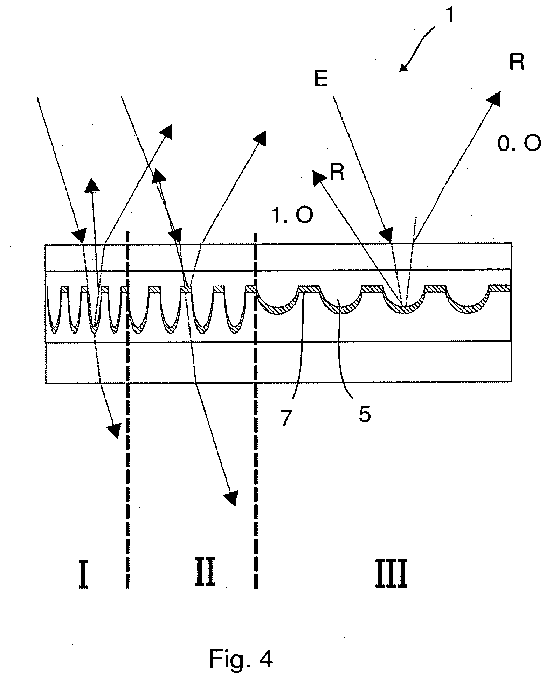

Fig. 4 zeigt eine weitere Ausführungsform, bei der das Aspektverhältnis der Mikrokavitäten der Gitterstruktur durch Variation der Strukturtiefe t im Bereich III zusätzlich verändert ist.

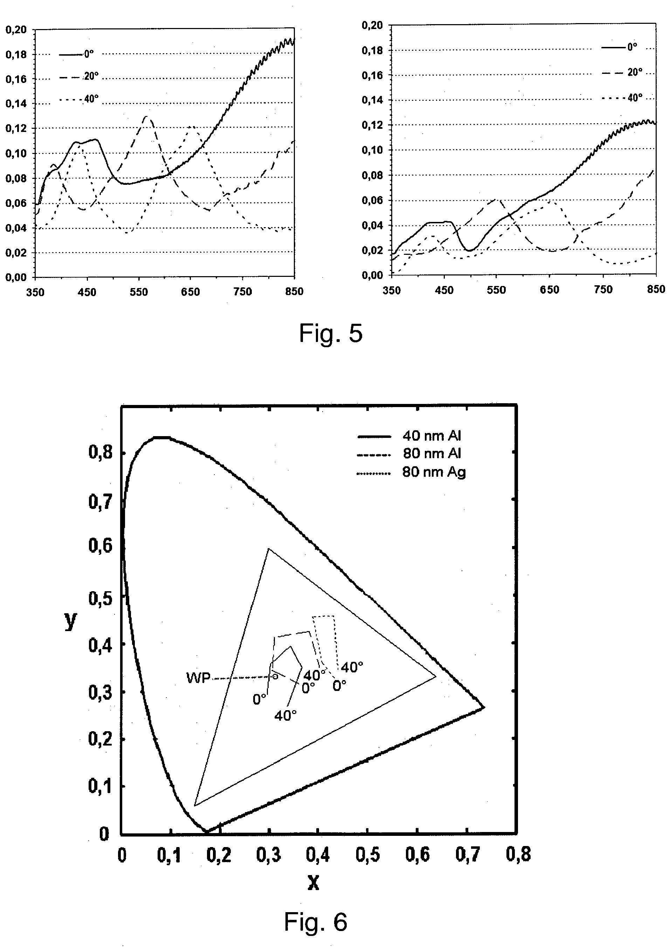

Nachfolgend wird die spektrale Transmission für ein Gitter mit p = 600 nm und den oben erwähnten Eigenschaften untersucht. Die Schicht 9 besteht aus Aluminium mit d = 40 nm (linke Darstellung der Fig. 5) bzw. d = 80 nm (rechte Darstellung der Fig. 5). Die Gitterstruktur 4 ist komplett in einen UVhärtenden Lack mit einem Brechungsindex von 1,52 eingebettet. Fig. 5 zeigt die gemessene Transmission der Sicherheitselemente 1 als Funktion der Wellenlänge (aufgetragen in nm) für verschiedene Einfallswinkel θ₀. Das einfallende Licht ist unpolarisiert.

In Fig. 5 sind für den senkrechten Lichteinfall bei 0° Peaks bei etwa 450 nm und ein Intensitätsanstieg im langwelligen Bereich oberhalb von 600 nm zu erkennen. Für schräge Einfallswinkel gibt es zwei Peaks welche mit zunehmendem Einfallswinkel in den langwelligen Bereich wandern. Diese Peaks sind verantwortlich für eine Farbfilterung des Sicherheitselementes im Durchlicht, d.h. in Transmission, da Strahlung mit zunehmenden Einfallswinkeln bei langwelligerer Strahlung transmittiert wird. Das beschriebene Sicherheitselement zeigt somit einen farbverschiebenden Kippeffekt. Diese Farbeigenschaften sind in Fig. 6 näher gezeigt, die ein CIE-1931-Farbdia-gramm zeigt.

Ein Farbwert ergibt sich aus der Faltung der spektralen Transmission mit der Empfindlichkeitskurve des menschlichen Auges, die bekanntermaßen im grünen Bereich am Größten ist und der spektralen Emission einer Beleuchtung, die zur Analyse als Normbeleuchtung D65 angenommen ist. Die so erhaltenen Farbwerte dreier verschiedener Gitter, die sich hinsichtlich der Dicke und des Materials der Schicht 9 unterscheiden, wie in Fig. 6 eingetragen ist, sind als Trajektorien für einen Winkelbereich für θ₀ von 0° bis 40° dargestellt. Der Weißpunkt ist in Fig. 6 mit WP bezeichnet.

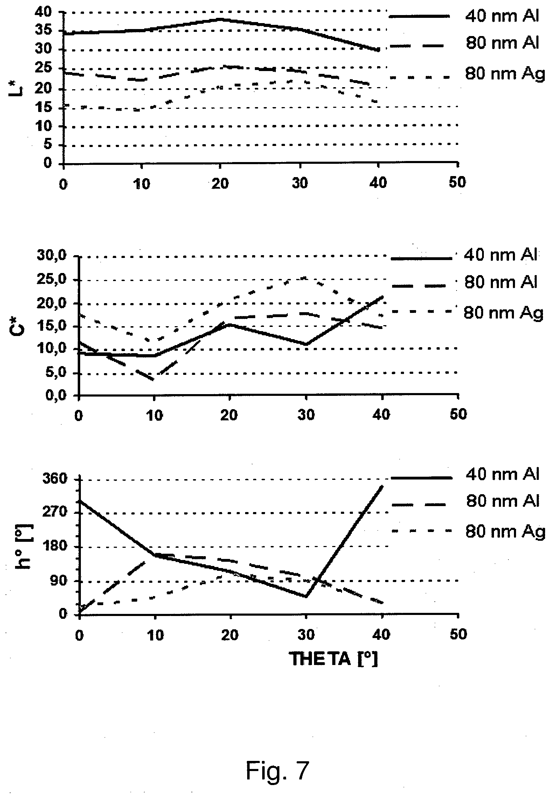

Die zugehörigen Farbwerte im LCh-Farbraum zeigt Fig. 7. Der Farbton C* und die Buntheit h* sowie die Farbhelligkeit L* sind aufgetragen.

Das den Messwerten der Fig. 5 bis 7 zugrunde liegende Gitter mit p = 600 nm, t = 321 nm, b = 305 nm und einem Aspektverhältnis von 1,09 variiert seine Farbe beim Kippen von Blau bis Rot. Dies gilt sowohl für eine Schichtdicke d = 40 nm als auch eine Schichtdicke d = 80 nm. Das gleiche, aber mit Silber mit einer Schichtdicke d = 80 nm bedampfte Gitter zeigt hingegen eine geringere Farbvariation. Jedoch sind seine Farben gesättigter, wie Fig. 6 zeigt. Diese Eigenschaften sind auch in der L*-Auftragung der Fig. 7 ersichtlich, gemäß der zudem die Helligkeit für die dünnere Aluminiumschicht höher ist als für die dickere.

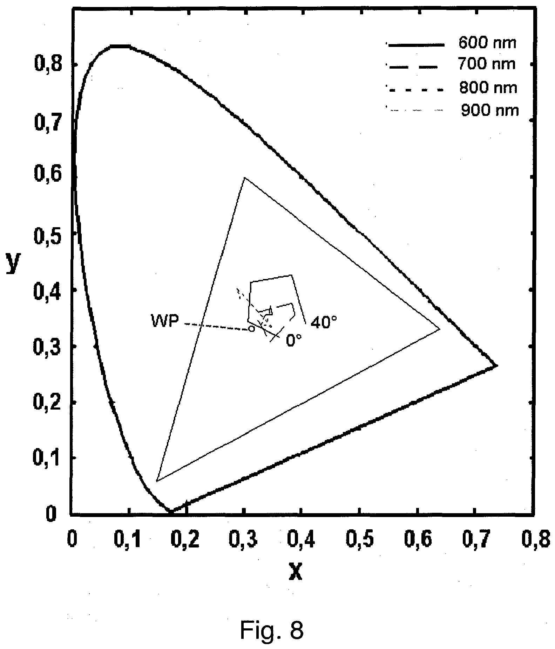

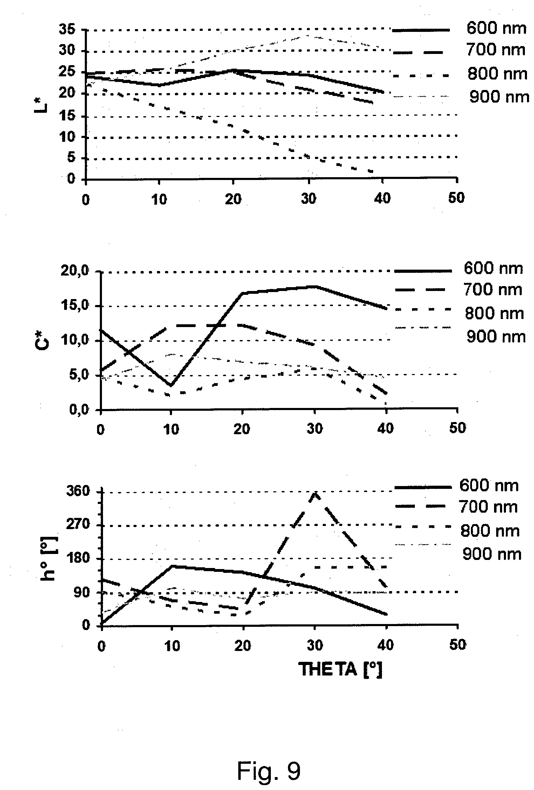

Die Fig. 8 und 9 zeigen Auftragungen entsprechend den Fig. 6 und 7, nun jedoch für ein Gitter mit einer Aluminiumschicht 9 mit d = 80 nm. Variiert ist in den Fig. 8 und 9 die Periode p. Man sieht, dass die Farbvariation für zunehmende Gitterperioden kleiner wird. Die Helligkeit kann beim Kippen je nach Gitterperiode entweder ab- oder zunehmen.

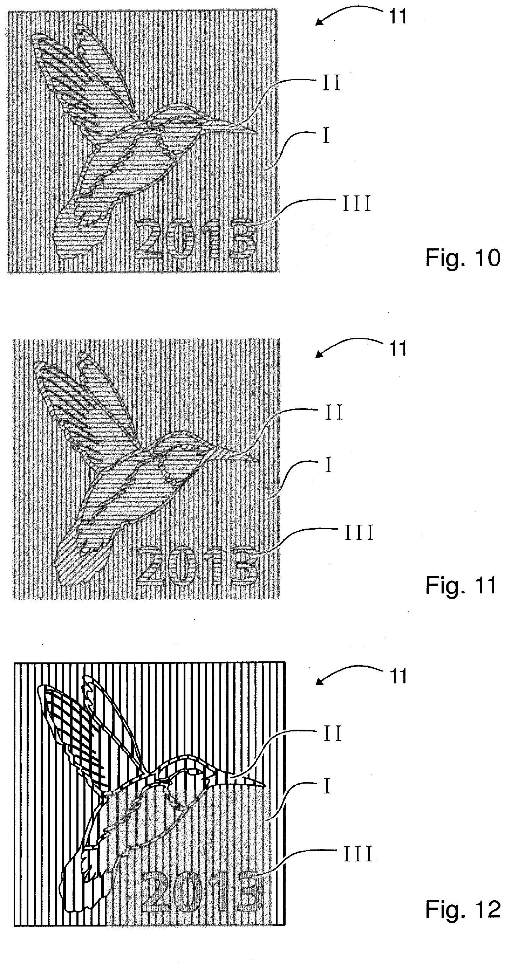

Die Wahl der Gitterstruktur 4 erlaubt es, ein Bild 11 zu generieren, das sich als Durchsichtsbild anders darstellt als als Reflexionsbild. Die Fig. 10 bis 12 zeigen drei exemplarische Varianten. In der Ausführungsform der Fig. 10 wird eine Gitterstruktur 4 verwendet, deren Rinnenrichtung der Mikrokavitäten entweder vertikal (Bereich I) oder horizontal (Bereich II und III) verläuft. Bereiche gleicher Rinnenrichtung können durch das Aspektverhältnis oder die Periode der Gitterstruktur unterschiedlich gestaltet werden.

Fig. 11 zeigt ein Bild 11, bei dem drei unterschiedliche Orientierungen der Rinnenrichtungen in den Bereichen I, II und III verwendet werden.

Fig. 12 zeigt schließlich eine Ausführungsform, in der die Rinnenrichtungen in allen Bereichen I bis III gleich sind, sich jedoch die Perioden in den drei Bereichen unterscheiden.

Bei senkrechter Betrachtung ist in Durchsicht kein Motiv zu sehen. Das Motiv erscheint beim Kippen. Zudem tritt eine Farbvertauschung beim Drehen auf. Diese komplementären Farben sind auch beim Ost/West- bzw. Nord/Süd-Kippen ersichtlich. Der Grund dafür ist, dass die spektrale Transmission kaum beeinflusst wird, wenn das Gitter senkrecht zur Einfallsebene gekippt wird.

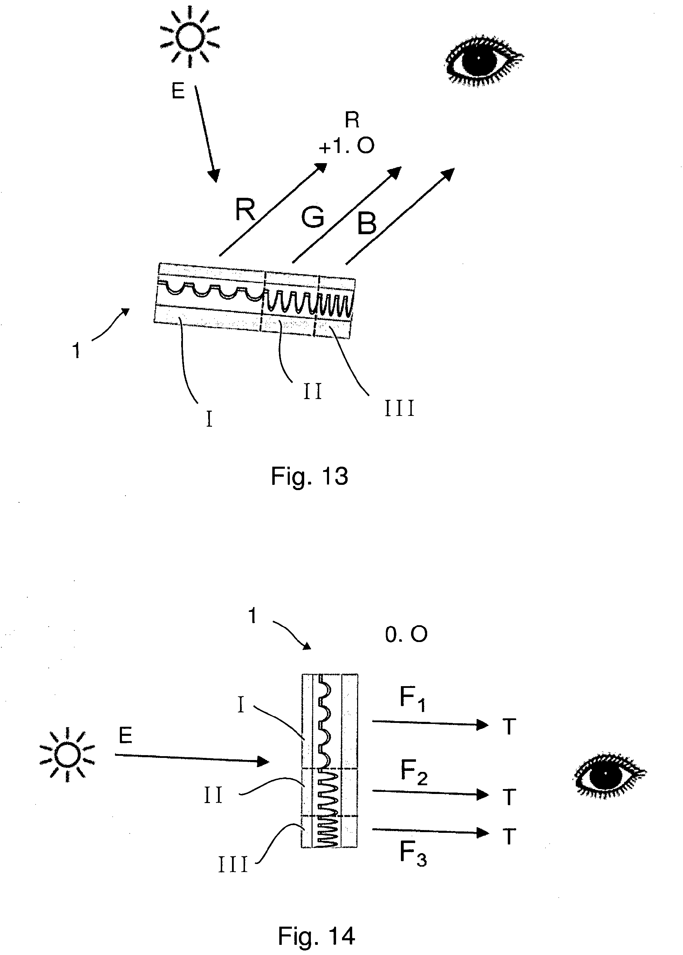

Herkömmliche Prägehologramme erscheinen in der ersten Beugungsordnung in Reflexion farbig. Die Strukturen sind hingegen in Transmission opak. Das Sicherheitselement 1 zeigt in allen Ausführungsformen neben dem Bild in Reflexion zusätzlich auch ein (vom Motiv her in der Regel gleiches) Bild in Transmission. Fig. 13 veranschaulicht das Auftreten der ersten Beugungsordnung (+1. O) des Sicherheitselementes 1 in Reflexion R. Wie zu erkennen ist, ergeben sich für die drei Bereiche I bis III, die unterschiedliche Perioden und Aspektverhältnisse für die Gitterstruktur 4 haben, unterschiedliche Farbeindrücke, z.B. Mischung der Primärfarben R, G, B. Insofern entspricht das Sicherheitselement in seinem dargebotenen Bild einem herkömmlichen Hologramm.

Das Sicherheitselement 1 ist jedoch auch zusätzlich teilweise transparent. Die nullte Ordnung (0. O) erscheint, wie Fig. 14 zeigt, in Transmission T farbig, wobei sich die Farbeindrücke F₁, F₂ und F₃ für die drei Bereiche I, II und III unterscheiden. Daher nimmt ein Betrachter das Motiv des Bildes 11 in Durchsicht farbig wahr, wenn es mit weißem Licht, z.B. Tageslicht, als einfallendem Licht E durchstrahlt wird.

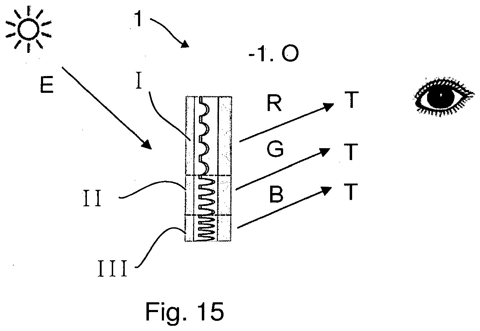

Zusätzlich kann auch die erste Beugungsordnung in Transmission beobachtet werden. Fig. 15 zeigt exemplarisch die - 1. Beugungsordnung (-1.O). Wenn einfallendes Licht E von oben auf das Sicherheitselement 1 fällt, wird es in Richtung eines sich auf der gegenüberliegenden Seite befindlichen Betrachters gebeugt, wobei wie in der Reflexion R der farbige Eindruck des Hologramms wahrgenommen wird. Dies ist besonders eindrucksvoll, wenn der direkte optische Pfad, vom Auge des Betrachters gesehen, auf eine dunkle Fläche weist und das Sicherheitselement 1 unter dem entsprechenden Kippwinkel farbig hell aufleuchtet, wobei sich der Farbeindruck wiederum für die drei Bereiche I, II und III unterscheidet.

Eine weitere Ausgestaltung kann durch weitere Gitterorientierungen erzielt werden. Dadurch können auch Bewegungs- bzw. Laufeffekte implementiert werden. Eine günstigste Variante ist die Motivgestaltung durch Bereiche, die mit Gittern unterschiedlicher Perioden gefüllt sind (siehe Fig. 12). Die Gitter in den einzelnen Bereichen können zudem unterschiedlich orientiert sein, so dass neben einer kontrastreichen Erscheinung in Transmission, das Hologramm ausgeprägt in Reflexion erscheint. Es können zusätzlich auch glatte oder Bereiche mit nicht transmissiven Gittern enthalten sein. Diese Bereiche würden in Durchsicht opak erscheinen. Dies kann bei einer Motivgestaltung zur Kontrastabgrenzung zwischen unterschiedlichen Bereichen dienen.

Das Sicherheitselement kann mit anderen bekannten Strukturen, wie Subwellenlängengitter, Mikrospiegel, Mattstrukturen etc., kombiniert werden, um eine noch höhere Fälschungssicherheit zu erzielen. Ferner können Bereiche demetallisiert und somit völlig transparent sein. Solche kombinierten Strukturen können die Designvielfalt erhöhen.

Die Herstellung der Gitterstruktur 4 erfolgt bevorzugt, wie im allgemeinen Teil der Beschreibung erläutert, durch Laserdirektbelichtung in einem photolithografischen Verfahren. Mikrokavitäten 5, 6 mit Abmessungen bis zu einem minimalen Durchmesser von 0,5 µm können mit Hilfe eines Laserwriters direkt in Photolack geschrieben werden. Aufgrund der nicht-linearen Empfindlichkeit gängiger Photolacke können bei geeigneter Wahl der Belichtungsintensität Strukturen erzeugt werden, die deutlich feiner als der Strahldurchmesser des Lasers sind. Die Strukturtiefe kann sehr einfach durch die Wahl der Belichtungsintensität variiert werden.

Zur Herstellung von Mikrokavitäten mit hoher Genauigkeit können optional auch Elektronenstrahl- bzw. "Focussed Ion Beam"-Belichtungsverfahren in Frage kommen. Ein belichtetes Original kann nach dem Entwickeln des Photolacks anschließend galvanisch abgeformt und über einen Prägeprozess in UV-Lack auf Folie oder direkt in die Oberfläche der Folie repliziert werden. Alternativ können auch Nanoimprint-Verfahren eingesetzt werden.

In einem letzten Schritt erfolgt die Beschichtung der Oberfläche, z. B. durch ungerichtetes Bedampfen. Metallisierte Oberflächen bzw. Interferenzschichtsysteme können durch Elektronenstrahlbedampfung, Sputtern oder durch Verdampfen unter Vakuum aufgebracht werden. Anschließend wird bevorzugt die beschichtete Seite zum Schutz mit der Decklackschicht 13 versehen.

Die Bilder können auch versteckte Informationen, z. B. Mikroschrift, Seriennummern, Symbole, etc., welche mit einem unbewaffneten Auge nicht aufgelöst werden können, auf einem Wertdokument niederlegen. Die Mikrobilder haben vorteilhafterweise wesentlich kleinere Strukturen als bekannte Lasergravuren. Die Verwendung der Mikrokavitätenstruktur 4 erlaubt eine sehr feine Strukturierung von Bildern oder Motiven mit hoher lateraler Auflösung, die mit herkömmlichen Druckverfahren nicht möglich ist.

Die Streifen 7 sind in den Zeichnungen als vollständig glatt eingetragen. Dies ist nicht zwingend erforderlich. Sie können eine Restrauigkeit haben, wobei ein Aspektverhältnis von 0,2 oder ein Winkel von 30° zur Horizontalen nicht überschritten wird.

Die Ausrichtung der Mikrokavitätenstruktur ist für den Durchlichteffekt irrelevant. Eine Invertierung des Sicherheitselements gegenüber der Darstellung der Fig. 1 bzw. 2 ist damit jederzeit möglich.

### Bezugszeichenliste

- 1: Sicherheitselement
- 2: Folie
- 3: Prägelackschicht
- 4: Gitterstruktur
- 5,6: Mikrokavitäten
- 7: Streifen
- 9: Schicht
- 13a: Decklackschicht
- 13b: Schutzschicht
- w: Strukturweite
- t: Strukturtiefe
- b: Breite
- d: Dicke
- p: Periode
- WP: Weißpunkt
- I, II, III: Bereich
- E: einfallende Strahlung
- R: reflektierte Strahlung
- T: transmittierte Strahlung
- 0. O: nullte Ordnung
- 1. O: erste Ordnung
- F₁, F₂, F₃: Farbeindruck

## Patentansprüche

1. Sicherheitselement zur Herstellung von Wertdokumenten, wie Banknoten, Schecks oder dergleichen, das ein Substrat (3) mit einer Oberseite aufweist und mindestens ein Bild (11) bereitstellt, wobei
- das Bild (11) durch eine Gitterstruktur (4), die eine Vielzahl von Mikrokavitäten (5, 6) aufweist, gebildet ist, und
- die Mikrokavitäten (5, 6) jeweils in einer zur Oberseite parallel liegenden Raumrichtung eine Strukturweite (w) von 0,5 µm bis 3 µm und senkrecht dazu eine Strukturtiefe (t) aufweisen und ein Aspektverhältnis haben, das durch das Verhältnis von Strukturtiefe (t) zu Strukturweite (w) definiert ist,
- auf die Gitterstruktur (4) eine metallhaltige Beschichtung aufgebracht ist,
**dadurch gekennzeichnet, dass**
- die Mikrokavitäten (5, 6) rinnenförmig sind,
- das Aspektverhältnis der Mikrokavitäten (5, 6) 0,3 oder größer ist, und
- in der Gitterstruktur (4) die Mikrokavitäten (5, 6) voneinander jeweils durch Streifen (7) getrennt sind, die eben und jeweils mehr als 200 nm und maximal 1.200 nm breit sind.

2. Sicherheitselement nach Anspruch 1, **dadurch gekennzeichnet, dass** die Beschichtung (9) auf den Streifen (7) die gleiche nominelle Dicke (d) hat, wie im Bereich der Mikrokavitäten (5, 6).

3. Sicherheitselement nach einem der Ansprüche 1 oder 2, **dadurch gekennzeichnet, dass** die Gitterstruktur (4) mindestens zwei Arten von Mikrokavitäten (5, 6) aufweist, die sich hinsichtlich des Aspektverhältnisses unterscheiden.

4. Sicherheitselement nach einem der Ansprüche 1 bis 3, **dadurch gekennzeichnet, dass** das Aspektverhältnis der Mikrokavitäten (5, 6) in der Gitterstruktur (4) gemäß einem ein Durchsichtsbild (11) definierenden, vorbestimmten Muster bereichsweise variiert.

5. Sicherheitselement nach einem der Ansprüche 1 bis 4, **dadurch gekennzeichnet, dass** die Mikrokavitäten (5, 6) und Streifen (7) quer zur Rinnenrichtung periodisch angeordnet sind, wobei die Periode (p) gemäß einem ein Bild (11) definierenden, vorbestimmten Muster bereichsweise variiert.

6. Sicherheitselement nach einem der Ansprüche 1 bis 5, **dadurch gekennzeichnet, dass** die Rinnenrichtung der Mikrokavitäten (5, 6) in der Gitterstruktur (4) gemäß einem ein Durchsichtsbild (11) definierenden, vorbestimmten Muster bereichsweise variiert.

7. Sicherheitselement nach einer Kombination der Ansprüche 5 und 6, **dadurch gekennzeichnet, dass** die Rinnenrichtungen und die Perioden (p) lateral so variieren, dass in Transmission als Durchsichtsbild ein Motiv und in Reflexion als Reflexionsbild ein Hologramm sichtbar ist.

8. Sicherheitselement nach einem der Ansprüche 1 bis 7, **dadurch gekennzeichnet, dass** die Beschichtung Al, Ag, Au, Cu oder Cr ist oder eine Legierung daraus aufweist.

9. Wertdokument mit einem Sicherheitselement (1) nach einem der Ansprüche 1 bis 8.

10. Herstellungsverfahren für ein Sicherheitselement (1) für Wertdokumente, wie Banknoten, Schecks oder dergleichen, das mindestens ein Bild (11) bereitstellt, wobei
- an einem Substrat (3), das eine Oberseite aufweist, zur Erzeugung eines Bild (11) eine Gitterstruktur (4), die eine Vielzahl nebeneinanderliegender Mikrokavitäten (5, 6) aufweist, ausgebildet wird,
- die Mikrokavitäten (5, 6) jeweils in einer zur Oberseite parallel liegenden Raumrichtung mit einer Strukturweite (w) von 0,5 µm bis 3 µm und senkrecht dazu mit einer Strukturtiefe (t) ausgebildet sind und ein Aspektverhältnis haben, das durch das Verhältnis von Strukturtiefe (t) zu Strukturweite (w) definiert ist, und
- auf die Gitterstruktur (4) eine metallhaltige Beschichtung (9) aufgebracht wird,
**dadurch gekennzeichnet, dass**
- die Mikrokavitäten rinnenförmig sind,
- das Aspektverhältnis der Mikrokavitäten (5, 6) 0,3 oder größer ist, und
- in der Gitterstruktur (4) die Mikrokavitäten (5, 6) voneinander jeweils durch Streifen (7) getrennt sind, die eben und jeweils mehr als 200 nm und maximal 1.200 nm breit sind.

11. Herstellungsverfahren nach Anspruch 10, **dadurch gekennzeichnet, dass** die Beschichtung (9) auf den Streifen (7) mit der gleichen nominelle Dicke (d) aufgebracht wird wie im Bereich der Mikrokavitäten (5, 6).

12. Herstellungsverfahren nach Anspruch 10 oder 11, **dadurch gekennzeichnet, dass** die Gitterstruktur (4) mindestens zwei Arten von Mikrokavitäten (5, 6) aufweist, die sich hinsichtlich des Aspektverhältnisses unterscheiden.

13. Herstellungsverfahren nach einem der Ansprüche 10 bis 12, **dadurch gekennzeichnet, dass** die Gitterstruktur (4) mit mindestens zwei Arten von Mikrokavitäten (5, 6) ausgebildet wird, die sich hinsichtlich des Aspektverhältnisses unterscheiden, wobei ein Durchsichtsbild (11) durch die mindestens zwei verschiedenen Arten von Mikrokavitäten (5, 6) strukturiert wird.

14. Herstellungsverfahren nach einem der Ansprüche 10 bis 13, **dadurch gekennzeichnet, dass** das Aspektverhältnis der Mikrokavitäten (5, 6) in der Gitterstruktur (4) gemäß einem ein Durchsichtsbild (11) definierenden, vorbestimmten Muster bereichsweise variiert wird.

15. Herstellungsverfahren nach einem der Ansprüche 10 bis 14, **dadurch gekennzeichnet, dass** die Mikrokavitäten (5, 6) und Streifen (7) quer zur Rinnenrichtung periodisch angeordnet werden, wobei die Periode (p) gemäß einem ein Reflexionsbild (11) definierenden, vorbestimmten Muster bereichsweise variiert wird.

16. Herstellungsverfahren nach einem der Ansprüche 10 bis 15, **dadurch gekennzeichnet, dass** die Rinnenrichtung der Mikrokavitäten (5, 6) in der Gitterstruktur (4) gemäß einem ein Durchsichtsbild (11) definierenden, vorbestimmten Muster bereichsweise variiert wird.

17. Herstellungsverfahren nach einer Kombination der Ansprüche 15 und 16, **dadurch gekennzeichnet, dass** die Rinnenrichtungen und die Perioden (p) lateral variiert werden, dass in Transmission als Durchsichtsbild ein Motiv und in Reflexion als Reflexionsbild ein Hologramm sichtbar ist.

18. Herstellungsverfahren nach einem der Ansprüche 10 bis 17, **dadurch gekennzeichnet, dass** für die Beschichtung Al, Ag, Au, Cu oder Cr oder eine Legierung daraus verwendet wird.

## Claims

1. Security element for producing valuable documents such as banknotes, cheques or the like, said security element comprising a substrate (3) with an upper side and providing at least one image (11), wherein
- the image (11) is formed by a grating structure (4) that comprises a multiplicity of micro-cavities (5, 6) and
- the micro-cavities (5, 6) each comprise a structure width (w) of 0.5 µm to 3 µm in a spatial direction lying parallel to the upper side and a structure depth (t) perpendicular thereto and an aspect ratio that is defined by the ratio of the structure depth (t) to structure width (w),
- a metal-containing coating is applied to the grating structure (4),
**characterized in that**
- the micro-cavities (5, 6) are groove-shaped,
- the aspect ratio of the micro-cavities (5, 6) is 0.3 or greater, and
- the micro-cavities (5, 6) are separated from one another in the grating structure (4) by strips (7) in each case, said strips being plane and each having a width of more than 200 nm and at most 1200 nm.

2. Security element according to Claim 1,
**characterized in that** the coating (9) on the strip (7) has the same nominal thickness (d) as in the region of the micro-cavities (5, 6).

3. Security element according to either of Claims 1 and 2,
**characterized in that** the grating structure (4) comprises at least two types of micro-cavities (5, 6) that differ in terms of the aspect ratio.

4. Security element according to any one of Claims 1 to 3,
**characterized in that** the aspect ratio of the micro-cavities (5, 6) in the grating structure (4) varies region-by-region according to a predetermined pattern that defines a transparent image (11).

5. Security element according to any one of Claims 1 to 4,
**characterized in that** the micro-cavities (5, 6) and stripes (7) are arranged periodically transversely to the groove direction, wherein the period (p) varies region-by-region according to a predetermined pattern that defines an image (11).

6. Security element according to any one of Claims 1 to 5,
**characterized in that** the groove direction of the micro-cavities (5, 6) in the grating structure (4) varies region-by-region according to a predetermined pattern that defines a transparent image (11).

7. Security element according to a combination of Claims 5 and 6,
**characterized in that** the groove directions and the periods (p) vary laterally in such a way that a motif is visible as a transparent image in transmission and a hologram is visible as a reflection image in reflection.

8. Security element according to any one of Claims 1 to 7,
**characterized in that** the coating is Al, Ag, Au, Cu or Cr or comprises an alloy thereof.

9. Valuable document having a security element (1) according to any one of Claims 1 to 8.

10. Production method for a security element (1) for valuable documents such as banknotes, cheques or the like, said security element providing at least one image (11), wherein
- a grating structure (4), which comprises a multiplicity of micro-cavities (5, 6) lying next to one another, is formed on a substrate (3), which comprises an upper side, for the purposes of producing an image (11),
- the micro-cavities (5, 6) are each embodied with a structure width (w) of 0.5 µm to 3 µm in a spatial direction lying parallel to the upper side and with a structure depth (t) perpendicular thereto and said micro-cavities each have an aspect ratio that is defined by the ratio of the structure depth (t) to the structure width (w), and
- a metal-containing coating (9) is applied to the grating structure (4),
**characterized in that**
- the micro-cavities are groove-shaped,
- the aspect ratio of the micro-cavities (5, 6) is 0.3 or greater, and
- the micro-cavities (5, 6) are separated from one another in the grating structure (4) by strips (7) in each case, said strips being plane and each having a width of more than 200 nm and at most 1200 nm.

11. Production method according to Claim 10,
**characterized in that** the coating (9) is applied on the strip (7) with the same nominal thickness (d) as in the region of the micro-cavities (5, 6).

12. Production method according to Claim 10 or 11,
**characterized in that** the grating structure (4) comprises at least two types of micro-cavities (5, 6), which differ in terms of the aspect ratio.

13. Production method according to any one of Claims 10 to 12,
**characterized in that** the grating structure (4) is formed with at least two types of micro-cavities (5, 6), which differ in terms of the aspect ratio, wherein a transparent image (11) is structured by the at least two different types of micro-cavities (5, 6).

14. Production method according to any one of Claims 10 to 13,
**characterized in that** the aspect ratio of the micro-cavities (5, 6) in the grating structure (4) is varied region-by-region according to a predetermined pattern that defines a transparent image (11).

15. Production method according to any one of Claims 10 to 14,
**characterized in that** the micro-cavities (5, 6) and strips (7) are arranged periodically transversely to the groove direction, wherein the period (p) is varied region-by-region according to a predetermined pattern that defines a reflection image (11).

16. Production method according to any one of Claims 10 to 15,
**characterized in that** the groove direction of the micro-cavities (5, 6) in the grating structure (4) is varied region-by-region according to a predetermined pattern that defines a transparent image (11).

17. Production method according to a combination of Claims 15 and 16, **characterized in that** the groove directions and the periods (p) are varied laterally, that a motif is visible as a transparent image in transmission and a hologram is visible as a reflection image in reflection.

18. Production method according to any one of Claims 10 to 17,
**characterized in that** Al, Ag, Au, Cu or Cr or an alloy thereof is used for the coating.

## Revendications

1. Elément de sécurité pour la fabrication de documents de valeur, tels que des billets de banque, des chèques et analogues, qui présente un substrat (3) avec un côté supérieur et qui fournit au moins une image (11), dans lequel
- l'image (11) est formée par une structure de grille (4), qui présente une multiplicité de microcavités (5, 6), et
- les microcavités (5, 6) présentent respectivement dans une direction de l'espace tracée parallèlement au côté supérieur une largeur de structure (w) de 0,5 µm à 3 µm et perpendiculairement à celui-ci une profondeur de structure (t) et possèdent un rapport de forme, qui est défini par le rapport de la profondeur de structure (t) à la largeur de structure (w),
- un revêtement contenant du métal est déposé sur la structure de grille (4), **caractérisé en ce que**
- les microcavités (5, 6) sont en forme de rigoles,
- le rapport de forme des microcavités (5, 6) vaut 0,3 ou plus, et
- les microcavités (5, 6) sont séparées les unes des autres dans la structure de grille (4) chaque fois par des bandes (7), qui sont planes et qui ont chacune une largeur de plus de 200 nm et au maximum de 1200 nm.

2. Elément de sécurité selon la revendication 1, **caractérisé en ce que** le revêtement (9) sur les bandes (7) a la même épaisseur nominale (d) que dans la région des microcavités (5, 6).

3. Elément de sécurité selon une des revendications 1 ou 2, **caractérisé en ce que** la structure de grille (4) présente au moins deux types de microcavités (5, 6), qui se différencient par leur rapport de forme.

4. Elément de sécurité selon l'une quelconque des revendications 1 à 3, **caractérisé en ce que** le rapport de forme des microcavités (5, 6) dans la structure de grille (4) varie localement selon un motif prédéterminé définissant une image de transparence (11).

5. Elément de sécurité selon l'une quelconque des revendications 1 à 4, **caractérisé en ce que** les microcavités (5, 6) et les bandes (7) sont disposées périodiquement transversalement à la direction des rigoles, dans lequel la période (p) varie localement selon un motif prédéterminé définissant une image (11).

6. Elément de sécurité selon l'une quelconque des revendications 1 à 5, **caractérisé en ce que** la direction des rigoles des microcavités (5, 6) dans la structure de grille (4) varie localement selon un motif prédéterminé définissant une image de transparence (11).

7. Elément de sécurité selon une combinaison des revendications 5 et 6, **caractérisé en ce que** les directions des rigoles et les périodes (p) varient latéralement, de telle manière qu'un motif soit visible en transmission comme image de transparence et qu'un hologramme soit visible en réflexion comme image de réflexion.

8. Elément de sécurité selon l'une quelconque des revendications 1 à 7, **caractérisé en ce que** le revêtement est en Al, Ag, Au, Cu ou Cr ou présente un alliage de ceux-ci.

9. Document de valeur avec un élément de sécurité (1) selon l'une quelconque des revendications 1 à 8.

10. Procédé de fabrication pour un élément de sécurité (1) pour des documents de valeur, tels que des billets de banque, des chèques ou analogues, qui fournit au moins une image (11), dans lequel
- on forme sur un substrat (3), qui présente un côté supérieur, pour produire une image (11) une structure de grille (4), qui présente une multiplicité de microcavités juxtaposées (5, 6),
- les microcavités (5, 6) sont formées respectivement dans une direction de l'espace tracée parallèlement au côté supérieur avec une largeur de structure (w) de 0,5 µm à 3 µm et perpendiculairement à celui-ci avec une profondeur de structure (t) et possèdent un rapport de forme, qui est défini par le rapport de la profondeur de structure (t) à la largeur de structure (w), et
- on dépose sur la structure de grille (4) un revêtement contenant du métal (9), **caractérisé en ce que**
- les microcavités sont en forme de rigoles,
- le rapport de forme des microcavités (5, 6) vaut 0,3 ou plus, et
- les microcavités (5, 6) sont séparées les unes des autres dans la structure de grille (4) chaque fois par des bandes (7), qui sont planes et qui ont chacune une largeur de plus de 200 nm et au maximum de 1200 nm.

11. Procédé de fabrication selon la revendication 10, **caractérisé en ce que** l'on dépose le revêtement (9) sur les bandes (7) avec la même épaisseur nominale (d) que dans la région des microcavités (5, 6).

12. Procédé de fabrication selon la revendication 10 ou 11, **caractérisé en ce que** la structure de grille (4) présente au moins deux types de microcavités (5, 6), qui se différencient par leur rapport de forme.

13. Procédé de fabrication selon l'une quelconque des revendications 10 à 12, **caractérisé en ce que** l'on forme la structure de grille (4) avec au moins deux types de microcavités (5, 6), qui se différencient par leur rapport de forme, dans lequel une image de transparence (11) est structurée par lesdits au moins deux types différents de microcavités (5, 6).

14. Procédé de fabrication selon l'une quelconque des revendications 10 à 13, **caractérisé en ce que** l'on fait varier localement le rapport de forme des microcavités (5, 6) dans la structure de grille (4) selon un motif prédéterminé définissant une image de transparence (11).

15. Procédé de fabrication selon l'une quelconque des revendications 10 à 14, **caractérisé en ce que** l'on dispose les microcavités (5, 6) et les bandes (7) périodiquement transversalement à la direction des rigoles, dans lequel on fait varier la période (p) localement selon un motif prédéterminé définissant une image de réflexion (11).

16. Procédé de fabrication selon l'une quelconque des revendications 10 à 15, **caractérisé en ce que** l'on fait varier localement la direction des rigoles des microcavités (5, 6) dans la structure de grille (4) selon un motif prédéterminé définissant une image de transparence (11).

17. Procédé de fabrication selon une combinaison des revendications 15 et 16, **caractérisé en ce que** l'on fait varier latéralement les directions des rigoles et les périodes (p), qu'un motif soit visible en transmission comme image de transparence et qu'un hologramme soit visible en réflexion comme image de réflexion.

18. Elément de sécurité selon l'une quelconque des revendications 10 à 17, **caractérisé en ce que** l'on utilise pour le revêtement Al, Ag, Au, Cu ou Cr ou un alliage de ceux-ci.
